# EUROPEAN PATENT APPLICATION

(11) **EP 4 386 106 A1**
(43) Date of publication of application: **19.06.2024**
(21) Application number: 22886449.2
(22) Date of filing: 30.08.2022
(51) Int. Cl.: C23C 2/06, B21D 22/20, C21D 1/18, C21D 9/00, C22C 38/00, C22C 38/60

(54) **HOT PRESSED MEMBER**

(30) Priority: 29.10.2021 JP 2021178272
(71) Applicant: JFE Steel Corporation, Tokyo 100-0011 (JP)
(72) Inventor: TANAKA Minoru, Tokyo 100-0011 (JP); SATO Rinta, Tokyo 100-0011 (JP); NISHIIKE Ryoto, Tokyo 100-0011 (JP); MIZUNO Daisuke, Tokyo 100-0011 (JP)
(74) Representative: Grünecker Patent- und Rechtsanwälte PartG mbB
(86) International application number: PCT/JP2022/032656
(87) International publication number: WO 2023/074115

(57) **Abstract**

A hot pressed member that has excellent appearance quality after coating and corrosion resistance at cut portion. The hot pressed member includes a steel sheet, a coated or plated layer containing FeAl, Fe₂Al₅, and Zn distributed over at least one side of the steel sheet, and a Zn-containing oxide layer distributed over the coated or plated layer. The solute Zn content in the Fe₂Al₅ is 10 mass% or more.

## Description

### TECHNICAL FIELD

The present disclosure relates to a hot pressed member and, in particular, to a hot pressed member having excellent appearance quality after coating and corrosion resistance at cut portion.

### BACKGROUND

In recent years, as the automobile field promotes weight reduction as well as higher performance of blank sheets, the use of high-strength hot-dip galvanized steel sheets or electrogalvanized steel sheets having rust resistance has been increasing. However, in many cases, as steel sheets become stronger, press formability decreases, making obtaining complex component shapes more difficult. For example, in automobile applications, suspension parts such as the chassis and structural members for the framework such as B-pillars are examples of difficult to form components that require rust resistance.

Against this background, the application of hot press technology, in which forming is performed hot instead of cold, is increasing. Hot press forming is a forming method in which a steel sheet is heated to the temperature range of austenite single phase (around 900 °C), then press formed at high temperature, and simultaneously rapidly cooled (quenched) by contact with the press mold. Press forming is performed in a heated and softened state, followed by quenching to increase strength, and therefore hot press forming is able to achieve both high strength and press formability of steel sheets.

However, hot press forming of galvanized steel sheets has the problem of cracking caused by liquid metal embrittlement (LME) at bent portions. That is, in hot press forming, press forming is performed while heated to a temperature higher than the melting point of a typical Zn coated or plated layer. As a result, the zinc liquefied by heating penetrates into the base steel sheet and causes LME, resulting in cracking at bent portions subjected to tensile stress.

Therefore, from the viewpoint of preventing cracking caused by LME, use of a steel sheet including a Zn-Ni coated or plated layer having a high melting point has been proposed as a steel sheet for hot press forming.

For example, Patent Literature (PTL) 1 describes a method of producing a hot pressed member in which a steel sheet including a Zn-Ni alloy coated or plated layer containing 7 mass% to 15 mass% Ni is heated to 800 °C or more and hot pressed.

Further, PTL 2 describes a method of producing a hot pressed member in which a steel sheet including a Zn-Ni alloy coated or plated layer containing 13 mass% or more Ni is heated to a temperature range from the Ac3 transformation temperature to 1200 °C and hot pressed.

### CITATION LIST

### Patent Literature

PTL 1: JP2013-503254 A (publication in Japan of WO2011/023418 A1)
PTL 2: JP2011-246801 A
PTL 3: JP2003-049256 A

### SUMMARY

### (Technical Problem)

Until recently, hot pressed members have mainly been used for inner panels of automobiles, that is, members that are not externally visible, and thus appearance quality has not been considered important. In recent years, however, hot pressed members are also being used for semi-outer panels, such as those around pillars that are visible when doors are opened, and as a result, hot pressed members are required to have excellent appearance quality and corrosion resistance after coating.

However, although the hot pressed members described in PTL 1 and 2 have excellent corrosion resistance at cut portions and the like after coating due to the presence of Zn in the coated or plated layer, Zn having a sacrificial protection effect, the appearance quality after coating is insufficient.

Aside from Zn, technologies have been proposed to use Al coated or plated steel sheets as steel sheets for automobile members. For example, PTL 3 describes an Al coated or plated steel sheet for high-strength automobile members that have excellent weldability and post-coating corrosion resistance. However, Al coating or plating does not have a sacrificial protection effect, and is therefore prone to red rust formation at cut portions, steel sheet edges, and the like.

It would be helpful to provide a hot pressed member that has excellent appearance quality after coating and corrosion resistance at cut portion.

### (Solution to Problem)

The present disclosure is made to address the problems described above, and may be summarized as follows.
1. A hot pressed member comprising:
   a steel sheet;
   a coated or plated layer containing FeAl, Fe₂Al₅, and Zn distributed over at least one side of the steel sheet; and
   a Zn-containing oxide layer distributed over the coated or plated layer, wherein
   solute Zn content in the Fe₂Al₅ is 10 mass% or more.
2. The hot pressed member according to 1, above, wherein thickness of the Zn-containing oxide layer is 0.10 µm or more and 5.0 µm or less.
3. The hot pressed member according to 1 or 2, above, wherein an FeAl/Fe₂Al₅ ratio in the coated or plated layer is 0.5 or more and 50 or less.
4. The hot pressed member according to 1 or 2, above, wherein an area ratio of Zn in the coated or plated layer is 1 % or more and 20 % or less.
5. The hot pressed member according to 3, above, wherein an area ratio of Zn in the coated or plated layer is 1 % or more and 20 % or less.

### (Advantageous Effect)

The hot pressed member according to the present disclosure has excellent appearance quality after coating and corrosion resistance at cut portion.

### DETAILED DESCRIPTION

The following is a detailed description of embodiments of the present disclosure. The following merely describes preferred embodiments of the present disclosure, and the present disclosure is by no means limited to the embodiments described. Further, the unit "%" for solute Zn content, chemical composition of a steel sheet, and composition of a coated or plated layer represents "mass%", unless otherwise specified.

A hot pressed member according to the present disclosure includes a steel sheet as a base metal, a coated or plated layer distributed over the steel sheet, and a Zn-containing oxide layer distributed over the coated or plated layer. Each is described below.

### [Steel sheet]

According to the present disclosure, the technical problems described above are addressed by controlling the composition of the coated or plated layer and the solute Zn content in Fe₂Al₅, as described below. Accordingly, any steel sheet may be used as the steel sheet, without any particular limitation.

However, from the viewpoint of use as an automobile member or the like, a high strength hot pressed member is preferred. In particular, in order to obtain a hot pressed member that exceeds the 1470 MPa grade, use of a steel sheet including the following chemical composition is preferred.

A chemical composition containing, in mass%,
C: 0.20 % to 0.35 %,
Si: 0.1 % to 0.5 %,
Mn: 1.0 % to 3.0 %,
P: 0.02 % or less,
S: 0.01 % or less,
Al: 0.1 % or less, and
N: 0.01 % or less,
with the balance being Fe and inevitable impurity.

Further, the chemical composition may optionally include at least one selected from the group consisting of:
Nb: 0.05 % or less,
Ti: 0.05 % or less,
B: 0.0050 % or less,
Cr: 0.3 % or less, and
Sb: 0.03 % or less.

The following is a description of the effects of each element in the above preferred chemical composition and the preferred content of each element.

### C: 0.20 % to 0.35 %

C is an element that has an effect of increasing strength by causing formation of microstructures such as martensite. From the viewpoint of obtaining strength exceeding the 1470 MPa grade, C content is preferably 0.20 % or more. However, when the C content exceeds 0.35 %, toughness of spot welded portions deteriorates. Therefore, the C content is preferably 0.35 % or less.

### Si: 0.1 % to 0.5 %

Si is an effective element in strengthening steel to obtain good material properties. To achieve the above effect, Si content is preferably 0.1 % or more. However, when the Si content exceeds 0.5 %, ferrite is stabilized and hardenability is reduced. Therefore, the Si content is preferably 0.5 % or less.

### Mn: 1.0 % to 3.0 %

Mn is an effective element for increasing the strength of steel. From the viewpoint of securing excellent mechanical properties and strength, Mn content is preferably 1.0 % or more. However, excessive Mn content increases surface concentration during annealing and affects adhesion of the coated or plated layer to the steel sheet. Therefore, from the viewpoint of improving the adhesion of the coated or plated layer, the Mn content is preferably 3.0 % or less.

### P: 0.02 % or less

Excessive P content degrades local ductility due to grain boundary embrittlement caused by P segregation to austenite grain boundaries during casting. As a result, balance between strength and ductility of the steel sheet is reduced. Therefore, from the viewpoint of improving the balance between strength and ductility of the steel sheet, the P content is preferably 0.02 % or less. A lower limit of the P content is not particularly limited, and may be 0 %. However, excessive reduction leads to increased production costs, and therefore the P content is preferably 0.001 % or more.

### S: 0.01 % or less

S forms as inclusions such as MnS, which cause degradation of impact resistance and cracking along metal flow in welded portions. Therefore, reducing S content as much as possible is desirable, and specifically 0.01 % or less is preferred. Further, from the viewpoint of securing good stretch flangeability, 0.005 % or less is preferred. A lower limit of the S content is not particularly limited, and may be 0 %. However, excessive reduction leads to increased production costs, and therefore the S content is preferably 0.0001 % or more.

### Al: 0.1 % or less

Al is an element that acts as a deoxidizer. However, when Al content exceeds 0.1 %, hardenability is reduced. Therefore, the Al content is preferably 0.1 % or less. A lower limit of the Al content is not particularly limited. From the viewpoint of increasing the effectiveness as a deoxidizer, the Al content is preferably 0.01 % or more.

### N: 0.01 % or less

When N content exceeds 0.01 %, AlN is formed during heating before hot press forming, and hardenability is reduced. Therefore, the N content is preferably 0.01 % or less. A lower limit of the N content is not particularly limited, and may be 0 %. However, excessive reduction leads to increased production costs, and therefore the N content is preferably 0.001 % or more.

### Nb: 0.05 % or less

Nb is an effective component for strengthening steel. However, excessive addition of Nb reduces shape fixability. Therefore, when Nb is added, Nb content is 0.05 % or less. A lower limit of the Nb content is not particularly limited, and may be 0 %.

### Ti: 0.05 % or less

Ti, like Nb, is also an effective component for strengthening steel. However, excessive addition of Ti reduces shape fixability. Therefore, when Ti is added, Ti content is 0.05 % or less. A lower limit of the Ti content is not particularly limited, and may be 0 %.

### B: 0.0050 % or less

B is an element that has an effect of inhibiting the formation and growth of ferrite from austenite grain boundaries. However, excessive addition of B greatly impairs formability. Therefore, when B is added, from the viewpoint of improving formability, B content is preferably 0.0050 % or less. A lower limit of the B content is not limited. From the viewpoint of increasing the effect of B addition, the B content is preferably 0.0002 % or more.

### Cr: 0.3 % or less

Cr is a useful element for strengthening steel and improving hardenability. However, Cr is an expensive element, and therefore when Cr is added, Cr content is preferably 0.3 % or less to reduce alloy cost. A lower limit of the Cu content is not particularly limited. From the viewpoint of increasing the effect of Cu addition, the Cu content is preferably 0.1 % or more.

### Sb: 0.03 % or less

Sb is an element that has an effect of helping prevent decarburization of the steel sheet surface layer during hot press forming. However, an excess of Sb leads to an increase in rolling load, resulting in lower productivity. Therefore, when Sb is added, from the viewpoint of further improving productivity, Sb content is preferably 0.03 % or less. A lower limit of the Sb content is not particularly limited. From the viewpoint of increasing the effect of Sb addition, the Sb content is preferably 0.003 % or more.

### [Coated or plated layer and Zn-containing oxide layer]

The hot pressed member according to the present disclosure includes a coated or plated layer. The coated or plated layer need only be provided on at least one side of the steel sheet, but may be provided on both sides. The coated or plated layer contains FeAl, Fe₂Al₅, and Zn. FeAl and Fe₂Al₅ are intermetallic compounds formed by the reaction of Fe and Al. Further, Zn is an element that has a sacrificial protection effect. A Zn-containing oxide layer is present at the surface of the coated or plated layer.

The hot pressed member according to the present disclosure that has the above layer structure may typically be produced by hot press forming a Zn-Al alloy coated or plated steel sheet. When a Zn-Al alloy coated or plated steel sheet is hot pressed, components such as Zn in the coated or plated layer diffuse to the base steel sheet, while components such as Fe in the base steel sheet diffuse to the coated or plated layer. At the same time, Zn in the coated or plated layer combines with oxygen present in the heating atmosphere to form a Zn-containing oxide layer at the surface of the coated or plated layer. At this time, Al has a higher affinity with Fe than Zn, and therefore Al in the coated or plated layer preferentially reacts with Fe to form FeAl intermetallic compounds (FeAl, Fe₂Al₅, and the like). Zn is mainly solute in the FeAl intermetallic compound phase, with some remaining as metallic Zn.

The following describes reasons why the hot pressed member according to the present disclosure that has the above layer structure has excellent post-coating corrosion resistance. Normally, when a steel sheet that has a Zn alloy coated or plated layer that does not contain Al in the coated or plated layer is subjected to hot press forming, large irregularities that have a height difference exceeding 10 µm are formed on the surface of the Zn alloy coated or plated layer. The inventors consider the reason for this to be as follows. As the temperature of the steel sheet is increased by heating before hot press forming, a surface oxide layer is formed at the surface of the Zn alloy coated or plated layer as the temperature rises. Eventually, when the temperature of the steel sheet exceeds the melting point of the coated or plated layer, the coated or plated layer between the surface oxide layer and the steel sheet melts and becomes liquid. Further, as the temperature of the steel sheet increases, the surface oxide layer also grows further. The surface oxide layer not only grows in the thickness direction, but also attempts to grow in the direction parallel to the surface of the coated or plated layer. As a result, the surface oxide layer grows in such a way as to form surface roughness and increase surface area. This is because the coated or plated layer between the surface oxide layer and the steel sheet is a fluid that can flow, allowing the surface oxide layer to change shape.

A hot pressed member produced in this way has large surface roughness. Accordingly, when chemical conversion treatment and electrodeposition coating are applied to such hot pressed members, the coating thickness is noticeably uneven, resulting in poor appearance quality.

In contrast, when a Zn-Al alloy coated or plated steel sheet is subjected to hot press forming, Fe preferentially reacts with Al to form FeAl intermetallic compounds (FeAl, Fe₂Al₅, and the like). The melting points of the FeAl intermetallic compounds are higher than that of a Zn alloy coated or plated layer, at 1000 °C or more, and therefore the coated or plated layer does not melt due to heating before hot press forming. Therefore, a hot pressed member is obtainable having a flatter surface than in a case where the coated or plated layer does not contain Al.

When hot pressed members produced in this way are subjected to chemical conversion treatment and electrodeposition coating, excellent appearance quality is obtainable because the thickness of the electrodeposition coating is uniform.

Further, when the surface of the coated or plated layer forms large irregularities during heating, the surface oxide layer may not be able to follow its own deformation and may separate. Such locations where the oxide has separated become initiation points for coating defects, which also cause a loss of appearance quality.

In contrast, when the surface oxide layer is flat, no separation due to deformation during heating occurs. Therefore, coating defects caused by separation of the surface oxide layer as described above do not occur.

The coated or plated layer of the hot pressed member may be a coated or plated layer containing FeAl, Fe₂Al₅, and Zn. The total content of FeAl, Fe₂Al₅, and Zn in the entire coated or plated layer is preferably 89 % or more. The total content of FeAl, Fe₂Al₅, and Zn in the entire coated or plated layer is more preferably 90 % or more. An upper limit of the total content of FeAl, Fe₂Al₅, and Zn in the coated or plated layer is not particularly limited, and may be, for example, 100 %, or 99.9 % or less.

Further, the coated or plated layer of the hot pressed member may include a chemical composition consisting of Fe and Al, with the balance being Zn. The chemical composition may optionally further contain Si. The coated or plated layer more preferably includes a chemical composition consisting of Fe: 20 % to 80 %, Al: 10 % to 50 %, Si: 0.1 % to 11 %, with the balance being Zn and inevitable impurity. The Al content is even more preferably 20 % to 50 %.

The chemical composition of the coated or plated layer of the hot pressed member may be determined by dissolving the coated or plated layer in hydrochloric acid aqueous solution and quantifying the elements in the resulting solution using inductively coupled plasma atomic emission spectrometry (ICP-AES). More specifically, measurements may be made by a method described in the EXAMPLES section of the present disclosure.

### Solute Zn content in Fe₂Al₅: 10 % or more

When Al is contained in Zn coating or plating as mentioned above, Fe preferentially reacts with Al during hot press forming to form FeAl intermetallic compounds (FeAl, Fe₂Al₅, and the like), and Zn mainly forms a solute in the FeAl intermetallic compounds. When the solute Zn content in Fe₂Al₅ is sufficiently high, good corrosion resistance at cut portion is obtainable. This is thought to be due to solute Zn forming highly protective Zn corrosion products when the FeAl intermetallic compound corrodes. When the solute Zn content in Fe₂Al₅ is less than 10 %, sufficient corrosion resistance at cut portion is not obtainable. Therefore, according to the present disclosure, the solute Zn content in Fe₂Al₅ in the coated or plated layer is 10 % or more. The solute Zn content is more preferably 12 % or more. The solute Zn content is even more preferably 15 % or more.

An upper limit of solute Zn content in FeaAls is not particularly limited. From the viewpoint of ease of production, solute Zn content in Fe₂Al₅ is preferably 30.0 % or less. Solute Zn content in Fe₂Al₅ is more preferably 25.0 % or less.

The solute Zn content in Fe₂Al₅ may be measured by an electron probe microanalyzer (EPMA). Specifically, the solute Zn content in Fe₂Al₅ of a hot pressed member at an arbitrary 50 locations is measured by an EPMA, and an average value is considered to be the solute Zn content in Fe₂Al₅.

### Thickness of Zn-containing oxide layer: 0.10 µm to 5.0 µm

The Zn-containing oxide layer on the surface of the coated or plated layer has good reactivity with the chemical conversion treatment liquid, and therefore the formation of the Zn-containing oxide layer is essential to obtain good chemical convertibility and thus good electrodeposition coating properties.

The thickness of the Zn-containing oxide layer is not particularly limited and may be any thickness. However, from the viewpoint of further increasing corrosion resistance at cut portion, the thickness of the Zn-containing oxide layer is preferably 0.10 µm or more. When the thickness of the Zn-containing oxide layer is 0.10 µm or more, final corrosion resistance is further improved as a result of high chemical convertibility.

On the other hand, when the thickness of the Zn-containing oxide layer is excessively thick, some of the Zn-containing oxide layer may separate. Portions where the Zn-containing oxide layer has separated become initiation points for coating defects, leading to a deterioration in appearance quality after coating. Therefore, from the viewpoint of further increasing post-coating corrosion resistance, the thickness of the Zn-containing oxide layer is preferably 5.0 µm or less.

The thickness of the Zn-containing oxide layer may be measured by observing a cross-section of the hot pressed member with a scanning electron microscope (SEM). Specifically, the cross-section of the hot pressed member is observed at 500× magnification using SEM, the thickness of the Zn-containing oxide layer is measured at 20 arbitrary locations, and an average value is considered to be the thickness of the Zn-containing oxide layer.

### FeAl/Fe₂Al₅ ratio: 0.5 to 50

The FeAl/Fe₂Al₅ ratio in the coated or plated layer is not limited and may be any value. However, the inventors found that among the same FeAl intermetallic compounds, a higher ratio of Fe₂Al₅ to FeAl provides better corrosion resistance at cut portion. The solute Zn content in Fe₂Al₅ is larger than that in FeAl, which is thought to be due to a higher ratio of Fe₂Al₅ increasing the solute Zn content in the coated or plated layer as a whole. Therefore, from the viewpoint of further improving corrosion resistance at cut portion, the FeAl/Fe₂Al₅ ratio in the coated or plated layer is preferably 50 or less.

On the other hand, when the FeAl/Fe₂Al₅ ratio is excessively small, microcracks may occur during press forming. This is thought to be due to vaporized Zn generated from solute Zn in FeaAls causing microcracks. The surface becomes rougher in portions with microcracks than in normal portions, resulting in deterioration of appearance quality. Therefore, from the viewpoint of further improving the appearance quality after coating, the FeAl/Fe₂Al₅ ratio is preferably 0.5 or more.

The FeAl/Fe₂Al₅ ratio may be measured by X-ray diffraction (XRD) measurement. Specifically, a diffraction pattern is obtained by XRD measurement, and the ratio of the intensity of the peak attributed to FeAl to the intensity of the peak attributed to Fe₂Al₅ in the diffraction pattern is the FeAl/Fe₂Al₅ ratio. Here, the interplanar spacing d of the peak attributed to Fe₂Al₅ is 2.19 and the interplanar spacing d of the peak attributed to FeAl is 2.05. Further, the conditions for the XRD measurement are: X-ray source: Cu-Kα, tube voltage: 40 kV, tube current: 30 mA.

### Zn area ratio: 1 % to 20 %

As mentioned above, Zn is an element that has a sacrificial protection effect, and corrosion resistance improves as the ratio of Zn in the coated or plated layer increases. Accordingly, from the viewpoint of further improving post-coating corrosion resistance, the area ratio of Zn in the coated or plated layer is preferably 1 % or more. On the other hand, when the area ratio of Zn in the coated or plated layer is too high, the surface of the coated or plated layer tends to become rough during press forming, which may deteriorate the appearance quality after coating. Therefore, from the viewpoint of further improving appearance quality after coating, the area ratio of Zn in the coated or plated layer is preferably 20 % or less.

The area ratio of Zn may be measured by an EPMA. Specifically, in measurement by an EPMA, a region in the coated or plated layer where solute Zn content is higher than 70 % is defined as a metallic Zn region, and the ratio of the area of the metallic Zn region to the total area of the coated or plated layer is defined as the area ratio of Zn.

The coating weight of the coated or plated layer on the hot pressed member is not particularly limited. Per side of the steel sheet, the coating weight is preferably 40 g/m² or more. The coating weight is more preferably 50 g/m² or more. The coating weight is even more preferably 60 g/m² or more. Further, the coating weight of the coated or plated layer, per side of the steel sheet, is preferably 400 g/m² or less. The coating weight is more preferably 300 g/m² or less. The coating weight is even more preferably 200 g/m² or less.

The coating weight of the coated or plated layer per side of the hot pressed member may be determined from the difference in weight before and after dissolving and removing the coated or plated layer from the hot pressed member using a hydrochloric acid aqueous solution. More specifically, measurements may be made by a method described in the EXAMPLES section of the present disclosure.

The coating weight of the coated or plated layer on the hot pressed member is normally higher than coating weight of the coated or plated layer on the steel sheet before hot press forming. This is due to interdiffusion between the metal of the coated or plated layer and the metal of the base steel sheet during the hot press forming. In particular, Fe concentration of the coated or plated layer after hot press forming is significantly larger than that of the coated or plated layer before hot press forming. The amount of Fe diffusion varies depending on heating conditions and the like during hot press forming.

### [Production method]

Next, a preferred method of producing the hot pressed member according to the present disclosure is described.

The hot pressed member according to the present disclosure may be produced by coating or plating a base steel sheet to obtain a coated or plated steel sheet, and then hot press forming the coated or plated steel sheet.

Any steel sheet may be used as the base steel sheet without being particularly limited. The chemical composition of a preferred steel sheet is as described earlier. The base steel sheet is preferably a hot-rolled steel sheet or a cold-rolled steel sheet.

Coating or plating the base steel sheet may be achieved by any method, but a hot dip coating method is preferred. The following describes a case of forming a coated steel sheet by a hot dip coating method.

When producing Zn coated steel sheets by hot dip coating, annealing and hot dip coating are usually performed after pretreatment to remove stains and oxide coating on the surface of the base steel sheet by alkaline electrolytic degreasing or pickling with hydrochloric acid. However, in order to produce a hot pressed member that meets the conditions according to the present disclosure, superheated steam is used to clean the steel sheet surface instead of the pretreatment described above. Cleaning with superheated steam causes a reaction between the base steel sheet surface and the high-temperature steam, forming a thick natural oxide layer on the base steel sheet surface. The thick natural oxide layer is thought to function as a diffusion barrier, thereby suppressing diffusion between the coated layer and the base steel sheet during the hot press forming. And as a result, the solute Zn content in Fe₂Al₅ in the coated layer of the finally obtained hot pressed member may be increased. More specifically, to achieve a solute Zn content of 10 mass% or more in Fe₂Al₅, the steel sheet surface may be treated using superheated steam at a temperature of 100 °C or more.

After the treatment using superheated steam described above, the base steel sheet is annealed before hot dip coating. When annealing is performed, the H₂/H₂O ratio in the atmosphere is 200 or more. By setting the H₂/H₂O ratio high, alloying elements contained in the base steel sheet form a concentrated layer on the steel sheet surface, and the concentrated layer in addition to the natural oxide layer is thought to function as a barrier to suppress diffusion in the hot press forming.

Subsequently, hot dip coating is applied to the base steel sheet after the annealing to produce a hot-dip coated steel sheet that includes a hot-dip coated layer on a surface of the base steel sheet. The hot-dip coated layer may be a Zn alloy coated layer containing Al. Specifically, the hot-dip coated layer may include a chemical composition consisting of Fe and Al, with the balance being Zn. The chemical composition may optionally further contain Si. The hot-dip coated layer more preferably includes a chemical composition consisting of Al: 20 % to 80%, Si: 0.1 % to 11 %, with the balance being Zn and inevitable impurity. Al content of 30 % to 70 % is even more preferred.

The chemical composition of the hot-dip coated layer of the hot-dip coated steel sheet may be determined by dissolving the hot-dip coated layer in a hydrochloric acid aqueous solution to which hexamethylenetetramine is added as an inhibitor, and quantifying the elements in the resulting dissolved solution using ICP-AES. More specifically, measurements may be made by a method described in the EXAMPLES section of the present disclosure.

The coating weight of the hot-dip coated layer is not particularly limited. Per side of the steel sheet, the coating weight is preferably 20 g/m² or more. The coating weight is more preferably 30 g/m² or more. The coating weight is even more preferably 50 g/m² or more. Further, the coating weight of the hot-dip coated layer, per side of the steel sheet, is preferably 300 g/m² or less. The coating weight is more preferably 250 g/m² or less. The coating weight is even more preferably 200 g/m² or less. As mentioned earlier, hot press forming increases the coating weight of the coated layer due to the diffusion of Fe from the base steel sheet. Therefore, by setting the coating weight of the hot-dip coated layer on the hot-dip coated steel sheet before hot press forming to a range described above, the coating weight of the coated layer on the hot pressed member may be set to a preferred range mentioned above.

The coating weight of the hot-dip coated layer per side of a hot-dip coated steel sheet may be determined from the difference in weight before and after dissolving and removing the hot-dip coated layer using hydrochloric acid aqueous solution with hexamethylenetetramine added as an inhibitor. More specifically, measurements may be made by a method described in the EXAMPLES section of the present disclosure.

Next, the hot-dip coated steel sheet is hot pressed to make a hot pressed member. In the hot press forming, the hot-dip coated steel sheet is first heated under a set of conditions including a heating temperature of the Ac3 transformation temperature or more and 1000 °C or less and a hold time of 0 min to 2.5 min, and then press formed using a press mold. By heating under the conditions described above, a hot pressed member having the layer structure described above is obtainable.

When the heating temperature is lower than the Ac3 transformation temperature, the strength required as a hot pressed member may not be obtained. On the other hand, when the heating temperature exceeds 1000 °C, operating costs increase.

Further, when the hold time exceeds 2.5 min, diffusion between the base steel sheet and the coated layer progresses, and as a result, the solute Zn content in Fe₂Al₅ cannot be 10 mass% or more. Further, from the viewpoint of making the FeAl/Fe₂Al₅ ratio be 50 or less, the hold time is 2.5 min or less. A lower limit of the hold time may be zero. That is, after heating to the heating temperature, press forming may be performed immediately without holding.

### EXAMPLES

Functions and effects according to the present disclosure are described below with reference to Examples. However, the present disclosure is not limited to the following Examples.

Hot-dip coated steel sheets were prepared by the following procedure, and the hot-dip coated steel sheets were hot pressed to make hot pressed members.

### • Preparation of hot-dip coated steel sheet

The base steel sheets used were cold-rolled steel sheets having a sheet thickness of 1.4 mm, each including a chemical composition containing, in mass%, C: 0.24 %, Si: 0.22 %, Mn: 2.0 %, P: 0.005 %, S: 0.001 %, Al: 0.03 %, N: 0.004 %, Nb: 0.03 %, Ti: 0.03 %, B: 0.001 %, Cr: 0.1 %, and Sb: 0.015 %, with the balance being Fe and inevitable impurity.

Each of the base steel sheets was subjected to high-temperature surface cleaning for 30 s by superheated steam at the temperatures listed in Tables 1 and 2. The base steel sheets were then annealed and hot-dip coated in this order under the conditions listed in Tables 1 and 2 to obtain hot-dip coated steel sheets.

The chemical compositions of the hot-dip coated layers and the coating weights of the hot-dip coated layers on each of the hot-dip coated steel sheets obtained were measured by the following procedure. The measurement results are listed in Tables 1 and 2.

### (Chemical composition of hot-dip coated layer)

First, from each hot-dip coated steel sheet to be evaluated, a 48 mm diameter sample was taken by blanking. One side of the sample (the side opposite the side of chemical composition measurement) was then masked. The surface oxide layer was then dissolved by immersing the sample for 60 min in a 20 g/L ammonium dichromate aqueous solution. Further, the hot-dip coated layer was dissolved by immersing the sample for 60 min in a 17 % hydrochloric acid aqueous solution, with 1 mL of hexamethylenetetramine added as an inhibitor. Metal components (Al, Si, Fe, and Zn) in the hydrochloric acid aqueous solution that dissolved the hot-dip coated layer were quantified by ICP-AES, and the mass of each element in the hot-dip coated layer was determined. The mass of each element obtained was divided by the total mass of the hot-dip coated layer to obtain the content (mass%) of each element in the hot-dip coated layer. The total mass of the hot-dip coated layer was calculated from the coating weight of the hot-dip coated layer (g/m²) and the area of the hot-dip coated layer (m²). In Tables 1 and 2, only the Al, Si, and Fe content is listed, the balance being Zn and inevitable impurity.

### (Coating weight of hot-dip coated layer)

First, from each hot pressed member to be evaluated, three 48 mm diameter samples were taken by blanking. One side of each sample (the side opposite the side of coating weight measurement) was masked. Each sample was then immersed for 60 min in a 20 g/L ammonium dichromate aqueous solution to dissolve the surface oxide layer, and then each sample was weighed. Further, each sample was then immersed for 60 min in a 17 % hydrochloric acid aqueous solution, with 1 mL of hexamethylenetetramine added as an inhibitor, to dissolve the hot-dip coated layer, and then each sample was weighed again. The hot-dip coating weight per unit area was calculated for each sample by dividing the weight difference before and after dissolution of the hot-dip coated layer by the area of the sample. For each hot-dip coated steel sheet, an average value of the coating weight for the three samples was determined as the coating weight of the hot-dip coated layer per side.

### • Preparation of hot pressed member

Next, from each hot-dip coated steel sheet, a 150 mm × 300 mm test piece was taken, and the test piece was heated under the conditions listed in Tables 1 and 2. An electric furnace was used for the heating.

After the defined hold time had elapsed, each test piece was removed from the electric furnace and immediately hot pressed at a forming start temperature of 700 °C using a hat-type press mold to obtain a hot pressed member. The shape of each obtained hot pressed member was 100 mm in flat length on the top surface, 50 mm in flat length on the side surfaces, and 50 mm in flat length on the bottom surface. Further, the bending radius (or bending R) of the press mold was 7 R for both shoulders on the top and bottom surfaces.

The chemical composition of the coated layer and the coating weight for each of the hot pressed members obtained were measured by the following procedure. The measurement results are listed in Tables 3 and 4.

### (Chemical composition of coated layer)

First, from each hot pressed member to be evaluated, a 48 mm diameter sample was taken by blanking. One side of the sample (the side opposite the side of chemical composition measurement) was then masked. The surface oxide layer was then dissolved by immersing the sample for 60 min in a 20 g/L ammonium dichromate aqueous solution. Further, the sample was immersed for 60 min in a 17 % hydrochloric acid aqueous solution to dissolve the coated layer. Metal components (Al, Si, Fe, and Zn) in the hydrochloric acid aqueous solution that dissolved the coated layer were quantified by ICP-AES, and the mass of each element in the coated layer was determined. The mass of each element obtained was divided by the total mass of the coated layer to obtain the content (mass%) of each element in the coated layer. The total mass of the coated layer was calculated from the coating weight of the coated layer (g/m²) and the area of the coated layer (m²). The measurement results are listed in Tables 3 and 4. In Tables 3 and 4, only the Al, Si, and Fe content is listed, the balance being Zn and inevitable impurity.

### (Coating weight of coated layer)

First, from each hot pressed member to be evaluated, three 48 mm diameter samples were taken by blanking. One side of each sample (the side opposite the side of coating weight measurement) was masked. Each sample was then immersed for 60 min in a 20 g/L ammonium dichromate aqueous solution to dissolve the surface oxide layer, and then each sample was weighed. Further, each sample was immersed for 60 min in a 17 % hydrochloric acid aqueous solution to dissolve the coated layer, and then each sample was weighed again. The coating weight per unit area was calculated for each sample by dividing the weight difference before and after dissolution of the coated layer by the area of the sample. For each hot pressed member, an average value of the coating weight for the three samples was determined as the coating weight of the coated layer per side.

Further, for each of the hot pressed members obtained, the solute Zn content in Fe₂Al₅, the thickness of the Zn-containing oxide layer, the FeAl/Fe₂Al₅ ratio in the coated layer, and the area ratio of Zn in the coated layer were measured by the following methods. The measurement results are listed in Tables 3 and 4.

### (Solute Zn content in FeaAls)

A test piece for cross-section observation was taken from the flat top surface of the hot pressed member and analyzed by an EPMA to determine the solute Zn content in Fe₂Al₅. Specifically, the solute Zn content in Fe₂Al₅ was analyzed at 50 arbitrary locations, and an average value was used as the solute Zn content in Fe₂Al₅.

### (Thickness of Zn-containing oxide layer)

A test piece for cross-section observation was taken from the flat top surface of the hot pressed member and observed to measure the thickness of the Zn-containing oxide layer. Specifically, the cross-section of the hot pressed member was observed at 500× magnification using SEM, the thickness of the Zn-containing oxide layer was measured at 20 arbitrary locations, and an average value was used as the thickness of the Zn-containing oxide layer.

### (FeAl/Fe₂Al₅ ratio in coated layer)

The FeAl/Fe₂Al₅ ratio in the coated layer was measured using samples cut from the hot pressed member. Specifically, the peak intensities attributed to FeAl (d = 2.05) and Fe₂Al₅ (d = 2.19) were measured from the diffraction pattern obtained by XRD measurement (X-ray source: Cu-Kα, tube voltage: 40 kV, tube current: 30 mA), and the intensity ratio was used as the FeAl/Fe₂Al₅ ratio in the coated layer.

### (Area ratio of Zn in coated layer)

The same test piece for cross-section observation used for the measurement of solute Zn content was analyzed by an EPMA to measure the area ratio of Zn in the coated layer. Specifically, a region in the coated layer where solute Zn content was higher than 70 % was defined as a metallic Zn region, and the ratio of the area of the metallic Zn region to the total area of the coated layer was defined as the area ratio of Zn.

Further, to evaluate the properties of the hot pressed members obtained, the appearance quality after coating and corrosion resistance at cut portion were evaluated under the following conditions.

### (Appearance quality after coating)

For each obtained hot pressed member, a 70 mm × 150 mm test piece was cut from the flat top surface, and a phosphoric acid chemical conversion treatment and electrodeposition coating were applied to the test piece. The phosphoric acid chemical conversion treatment was performed under standard conditions using a PB-SX35 manufactured by Nihon Parkerizing Co., Ltd., and electrodeposition coating was applied using a GT100V manufactured by Kansai Paint Co., Ltd., to achieve a coating thickness of 15 µm. The baking conditions for the electrodeposition coating were holding at 170 °C for 20 min.

A sample with an observation length of 15 mm was cut from the test piece after the electrodeposition coating, and then adjusted to be a sample for cross-section observation. First, the thinnest electrodeposited coating selected in a 200× field of view by SEM was further magnified to 1000×, the field of view was divided into 10 equal parts and each electrodeposited coating thickness was measured. Average thickness D1 (µm) and the minimum thickness D2 (µm) were measured and the uniformity of the electrodeposited coating was evaluated using the following criteria. When the evaluation was ⊚ , ○, or △, the electrodeposition coating film thickness was judged to be uniform and the appearance quality was judged to be excellent. The evaluation results are listed in Tables 3 and 4.
⊚: D1 - D2 is less than 4.0 µm
○: D1 - D2 is 4.0 µm or more and less than 6.0 µm
△: D1 - D2 is 6.0 µm or more and less than 8.0 µm
×: D1 - D2 is 8.0 µm or more

### (Corrosion resistance at cut portion)

Crosscut scratches (60° angle) totaling 160 mm in length (80 mm each) were formed in the center of the test pieces after the electrodeposition coating, and then subjected to a 30 cycle corrosion test (SAE-J2334). The state of rusting at the cut portion after the corrosion test was observed, and corrosion resistance of the cut portion was determined based on the following criteria. When the total length where red rust occurred in the cut scratches was less than 80 mm (grade 2-4), the cut area corrosion resistance was considered excellent. The evaluation results are listed in Tables 3 and 4.
Grade 4: no red rust in the cut portion
Grade 3: length of red rust occurrence in cuts is less than 30 mm
Grade 2: length of red rust occurrence in cuts is 30 mm or more and less than 80 mm
Grade 1: length of red rust occurrence in cuts is 80 mm or more

As can be seen from Table 1, the hot pressed members meeting the conditions of the present disclosure had excellent appearance quality after coating and corrosion resistance at cut portion.

### [Table 1]

**Table 1**

| No. | Production conditions | | | | | | | |
|---|---|---|---|---|---|---|---|---|
| | Coated layer | | | | Heated steam | Annealing | Heating | |
| | Chemical composition (mass%)* | | | Coating weight (g/m²) | Temp. (°C ) | H₂/H₂O | Heating temp. (°C) | Hold time (min) |
| | Al | Si | Fe | | | | | |
| 1 | 50.0 | 1.0 | 0.5 | 150 | 200 | 50 | 900 | 1.2 |
| 2 | 50.0 | 1.0 | 0.5 | 150 | 200 | 150 | 900 | 1.2 |
| 3 | 50.0 | 1.0 | 0.5 | 150 | 200 | 250 | 900 | 1.2 |
| 4 | 50.0 | 1.0 | 0.5 | 150 | 200 | 500 | 900 | 1.2 |
| 5 | 50.0 | 1.0 | 0.5 | 150 | 200 | 2000 | 900 | 1.2 |
| 6 | 50.0 | 1.0 | 0.5 | 150 | 50 | 250 | 900 | 1.2 |
| 7 | 50.0 | 1.0 | 0.5 | 150 | 80 | 250 | 900 | 1.2 |
| 8 | 50.0 | 1.0 | 0.5 | 150 | 120 | 250 | 900 | 1.2 |
| 9 | 50.0 | 1.0 | 0.5 | 150 | 250 | 250 | 900 | 1.2 |
| 10 | 50.0 | 1.0 | 0.5 | 150 | 350 | 250 | 900 | 1.2 |
| 11 | 50.0 | 1.0 | 0.5 | 150 | 200 | 250 | 900 | 0.0 |
| 12 | 50.0 | 1.0 | 0.5 | 150 | 200 | 250 | 900 | 1.0 |
| 13 | 50.0 | 1.0 | 0.5 | 150 | 200 | 250 | 900 | 2.0 |
| 14 | 50.0 | 1.0 | 0.5 | 150 | 200 | 250 | 900 | 3.0 |
| 15 | 50.0 | 1.0 | 0.5 | 150 | 200 | 250 | 900 | 4.0 |
| 16 | 10 | 1.0 | 0.5 | 150 | 200 | 250 | 900 | 1.2 |
| 17 | 25 | 1.0 | 0.5 | 150 | 200 | 250 | 900 | 1.2 |
| 18 | 35 | 1.0 | 0.5 | 150 | 200 | 250 | 900 | 1.2 |

| | | | | | | | | |
|---|---|---|---|---|---|---|---|---|
| * The balance being Zn and inevitable impurity | | | | | | | | |

### [Table 2]

**Table 2**

| No. | Production conditions | | | | | | | |
|---|---|---|---|---|---|---|---|---|
| | Coated layer | | | | Heated steam | Annealing | Heating | |
| | Chemical composition (mass%)* | | | Coating weight (g/m²) | Temp. (°C) | H₂/H₂O | Heating temp. (°C) | Hold time (min) |
| | Al | Si | Fe | | | | | |
| 19 | 55 | 1.0 | 0.5 | 150 | 200 | 250 | 900 | 1.2 |
| 20 | 65 | 1.0 | 0.5 | 150 | 200 | 250 | 900 | 1.2 |
| 21 | 75 | 1.0 | 0.5 | 150 | 200 | 250 | 900 | 1.2 |
| 22 | 85 | 1.0 | 0.5 | 150 | 200 | 250 | 900 | 1.2 |
| 23 | 50.0 | - | 0.5 | 150 | 200 | 250 | 900 | 1.2 |
| 24 | 50.0 | 0.1 | 0.5 | 150 | 200 | 250 | 900 | 1.2 |
| 25 | 50.0 | 1.2 | 0.5 | 150 | 200 | 250 | 900 | 1.2 |
| 26 | 50.0 | 2.4 | 0.5 | 150 | 200 | 250 | 900 | 1.2 |
| 27 | 50.0 | 4.8 | 0.5 | 150 | 200 | 250 | 900 | 1.2 |
| 28 | 50.0 | 9.6 | 0.5 | 150 | 200 | 250 | 900 | 1.2 |
| 29 | 50.0 | 13.0 | 0.5 | 150 | 200 | 250 | 900 | 1.2 |
| 30 | 50.0 | 1.0 | 0.5 | 250 | 200 | 250 | 900 | 1.2 |
| 31 | 50.0 | 1.0 | 0.5 | 210 | 200 | 250 | 900 | 1.2 |
| 32 | 50.0 | 1.0 | 0.5 | 125 | 200 | 250 | 900 | 1.2 |
| 33 | 50.0 | 1.0 | 0.5 | 100 | 200 | 250 | 900 | 1.2 |
| 34 | 50.0 | 1.0 | 0.5 | 60 | 200 | 250 | 900 | 1.2 |
| 35 | 50.0 | 1.0 | 0.5 | 45 | 200 | 250 | 900 | 1.2 |
| 36 | 50.0 | 1.0 | 0.5 | 30 | 200 | 250 | 900 | 1.2 |

| | | | | | | | | |
|---|---|---|---|---|---|---|---|---|
| * The balance being Zn and inevitable impurity | | | | | | | | |

### [Table 3]

**Table 3**

| No. | Hot pressed member | | | | | | | | | | Remarks |
|---|---|---|---|---|---|---|---|---|---|---|---|
| | Coated layer | | | | | | | Zn-containing oxide layer | Evaluation result | | |
| | Chemical composition (mass%)* | | | Coating weight (g/m²) | Solute Zn content in Fe₂Al₅ (mass%) | FeAl/ Fe₂Al₅ | Area ratio of Zn (%) | Thickness (µm) | Appearanc e quality after coating | Corrosion resistance at cut portion | |
| | Al | Si | Fe | | | | | | | | |
| 1 | 25.0 | 0.5 | 50.1 | 224 | 5.0 | 10.0 | 5.0 | 0.5 | × | 1 | Comparative Example |
| 2 | 25.0 | 0.5 | 50.0 | 224 | 9.0 | 10.0 | 5.0 | 0.5 | Δ | 1 | Comparative Example |
| 3 | 25.5 | 0.5 | 49.1 | 223 | 10.5 | 10.0 | 5.0 | 0.5 | ⊚ | 4 | Example |
| 4 | 24.1 | 0.5 | 51.8 | 227 | 12.0 | 10.0 | 5.0 | 0.5 | ⊚ | 4 | Example |
| 5 | 26.1 | 0.5 | 47.9 | 221 | 15.0 | 10.0 | 5.0 | 0.5 | ⊚ | 4 | Example |
| 6 | 25.6 | 0.5 | 48.9 | 223 | 8.0 | 10.0 | 5.0 | 0.5 | × | 1 | Comparative Example |
| 7 | 24.5 | 0.5 | 51.0 | 226 | 9.5 | 10.0 | 5.0 | 0.5 | Δ | 1 | Comparative Example |
| 8 | 25.8 | 0.5 | 48.4 | 222 | 10.3 | 10.0 | 5.0 | 0.5 | ⊚ | 4 | Example |
| 9 | 24.9 | 0.5 | 50.2 | 225 | 10.8 | 10.0 | 5.0 | 0.5 | ⊚ | 4 | Example |
| 10 | 25.5 | 0.5 | 49.1 | 223 | 11.4 | 10.0 | 5.0 | 0.5 | ⊚ | 4 | Example |
| 11 | 29.7 | 0.6 | 40.7 | 210 | 15.5 | 1.0 | 10.0 | 0.3 | ⊚ | 4 | Example |
| 12 | 27.1 | 0.5 | 45.8 | 218 | 11.8 | 8.0 | 8.0 | 0.4 | ⊚ | 4 | Example |
| 13 | 21.5 | 0.4 | 57.0 | 235 | 10.1 | 35.0 | 3.5 | 0.8 | ⊚ | 4 | Example |
| 14 | 16.3 | 0.3 | 67.4 | 250 | 8.5 | 60.0 | 1.2 | 2.5 | Δ | 1 | Comparative Example |
| 15 | 15.9 | 0.3 | 68.3 | 252 | 7.2 | 75.0 | 0.5 | 4.5 | × | 1 | Comparative Example |
| 16 | 4.8 | 0.5 | 52.0 | 227 | 25.0 | 10.0 | 5.0 | 7.0 | Δ | 4 | Example |
| 17 | 12.4 | 0.5 | 50.4 | 225 | 20.0 | 10.0 | 5.0 | 5.2 | Δ | 4 | Example |
| 18 | 17.3 | 0.5 | 50.5 | 225 | 16.0 | 10.0 | 5.0 | 4.8 | ○ | 4 | Example |

| | | | | | | | | | | | |
|---|---|---|---|---|---|---|---|---|---|---|---|
| * The balance being Zn and inevitable impurity | | | | | | | | | | | |

### [Table 4]

**Table 4**

| No. | Hot pressed member | | | | | | | | | | Remarks |
|---|---|---|---|---|---|---|---|---|---|---|---|
| | Coated layer | | | | | | | Zn-containing oxide layer | Evaluation result | | |
| | Chemical composition (mass%)* | | | Coating weight (g/m²) | Solute Zn content in Fe₂Al₅ (mass%) | Area FeAl/ ratio of Fe₂Al₅ Zn (%) | | Thickness (µm) | Appearanc e quality after coating | Corrosion resistance at cut portion | |
| | Al | Si | Fe | | | | | | | | |
| 19 | 28.1 | 0.5 | 49.0 | 223 | 12.0 | 10.0 | 5.0 | 3.0 | ⊚ | 4 | Example |
| 20 | 31.1 | 0.5 | 52.2 | 228 | 11.5 | 10.0 | 5.0 | 1.2 | ⊚ | 4 | Example |
| 21 | 35.8 | 0.5 | 52.3 | 228 | 11.0 | 10.0 | 5.0 | 0.5 | ⊚ | 3 | Example |
| 22 | 42.9 | 0.5 | 49.5 | 224 | 10.1 | 10.0 | 5.0 | 0.05 | ⊚ | 2 | Example |
| 23 | 26.3 | - | 47.5 | 221 | 12.0 | 75.0 | 5.0 | 0.5 | ⊚ | 2 | Example |
| 24 | 24.2 | 0.0 | 51.7 | 227 | 12.0 | 51.0 | 5.0 | 0.5 | ⊚ | 3 | Example |
| 25 | 24.9 | 0.6 | 50.2 | 225 | 12.0 | 48.0 | 5.0 | 0.5 | ⊚ | 4 | Example |
| 26 | 25.7 | 1.2 | 48.6 | 222 | 12.0 | 25.0 | 5.0 | 0.5 | ⊚ | 4 | Example |
| 27 | 25.2 | 2.4 | 49.7 | 224 | 12.0 | 8.0 | 5.0 | 0.5 | ⊚ | 4 | Example |
| 28 | 24.2 | 4.6 | 51.7 | 227 | 12.0 | 0.6 | 5.0 | 0.5 | ○ | 4 | Example |
| 29 | 23.8 | 6.2 | 52.4 | 228 | 12.0 | 0.4 | 5.0 | 0.5 | Δ | 4 | Example |
| 30 | 24.9 | 0.5 | 50.3 | 375 | 12.0 | 10.0 | 21.0 | 0.5 | Δ | 4 | Example |
| 31 | 24.2 | 0.5 | 51.6 | 317 | 12.0 | 10.0 | 19.0 | 0.5 | ○ | 4 | Example |
| 32 | 25.9 | 0.5 | 48.3 | 185 | 12.0 | 10.0 | 10.0 | 0.5 | ⊚ | 4 | Example |
| 33 | 26.3 | 0.5 | 47.5 | 147 | 12.0 | 10.0 | 5.0 | 0.5 | ⊚ | 4 | Example |
| 34 | 24.3 | 0.5 | 51.5 | 91 | 12.0 | 10.0 | 1.1 | 0.5 | ⊚ | 4 | Example |
| 35 | 25.1 | 0.5 | 49.9 | 67 | 12.0 | 10.0 | 0.9 | 0.5 | ⊚ | 3 | Example |
| 36 | 25.7 | 0.5 | 48.6 | 44 | 21.0 | 10.0 | 0.5 | 0.5 | ⊚ | 2 | Example |

| | | | | | | | | | | | |
|---|---|---|---|---|---|---|---|---|---|---|---|
| * The balance being Zn and inevitable impurity | | | | | | | | | | | |

## Claims

1. A hot pressed member comprising:
a steel sheet;
a coated or plated layer containing FeAl, Fe₂Al₅, and Zn distributed over at least one side of the steel sheet; and
a Zn-containing oxide layer distributed over the coated or plated layer, wherein
solute Zn content in the Fe₂Al₅ is 10 mass% or more.

2. The hot pressed member according to claim 1, wherein thickness of the Zn-containing oxide layer is 0.10 µm or more and 5.0 µm or less.

3. The hot pressed member according to claim 1 or 2, wherein an FeAl/Fe₂Al₅ ratio in the coated or plated layer is 0.5 or more and 50 or less.

4. The hot pressed member according to claim 1 or 2, wherein an area ratio of Zn in the coated or plated layer is 1 % or more and 20 % or less.

5. The hot pressed member according to claim 3, wherein an area ratio of Zn in the coated or plated layer is 1 % or more and 20 % or less.
